# EUROPEAN PATENT SPECIFICATION

(11) **EP 2 000 291 B1**
(45) Date of publication and mention of the grant of the patent: **23.04.2014**
(21) Application number: 07739003.7
(22) Date of filing: 19.03.2007
(51) Int. Cl.: B29D 30/30, B60C 9/18

(54) **METHOD OF MANUFACTURING PNEUMATIC TIRE**
VERFAHREN ZUR HERSTELLUNG EINES LUFTREIFENS
PROCÉDÉ DE FABRICATION D'UN PNEUMATIQUE

(30) Priority: 27.03.2006 JP 2006085325
(43) Date of publication of application: 10.12.2008
(73) Proprietor: The Yokohama Rubber Co., Ltd., Minato-ku Tokyo 105-8685 (JP); Tokusen Industry Co., Ltd., Ono-shi Hyogo 675-1361 (JP)
(72) Inventor: HARIKAE, Shinya, Hiratsuka-shi, Kanagawa 254-8601 (JP); MORIOKA, Noritaka, Ono-shi, Hyogo 675-1361 (JP)
(74) Representative: Thinat, Michel
(86) International application number: PCT/JP2007/055560
(87) International publication number: WO 2007/119429

(56) References cited:
- EP-A1- 1 284 203
- JP-A- 06 255 310
- JP-A- 09 156 315
- JP-A- 2000 052 711
- JP-A- 2000 129 583
- JP-A- 2003 227 082
- US-A- 3 682 222
- US-A1- 2003 047 265
- US-A1- 2004 256 044
- US-A1- 2005 139 324

## Description

### TECHNICAL FIELD

The present invention relates to a method of manufacturing pneumatic tires, andmoreparticularly, toamethod of manufacturing a pneumatic tire which can improve productivity.

### TECHNICAL BACKGROUND

There are conventionally known pneumatic tires having a belt cover layer disposed radially outwardly of the belt plies, the belt cover layer being structured such that a steel cord is spirally and continuously wound at an angle of nearly 0° with respect to the circumferential direction of the tire, see patent documents JP56082609A and JP2000255214A, for example.

There are also known pneumatic tires having an interlaminar reinforcement layer disposed between belt plies, the interlaminar reinforcement layer being structured such that a steel cord is spirally and continuously wound at an angle of nearly 0° with respect to the circumferential direction of the tire, see a patent document WO97/30856, for example.

Further, there are known pneumatic tires having a belt ply which is structured such that a steel cord of a single wire produced in the shape of a wave is spirally and continuously wound at an angle of nearly 0° with respect to the circumferential direction of the tire, see patent documents JP06191219A and JP11011113A for example.

Tire characteristics such as wear resistance, high speed durability and steering stability can be controlled by properly changing circumferential rigidity of the above-mentioned belt cover layer, interlaminar reinforcement layer and belt ply (referred to a belt-reinforcing layer below) in the widthwise direction of the tire.

Such a belt-reinforcing layer is formed by shaping a steel cord with a shaping device as in patent document JP2002266264A for example, winding the shaped steel cord around a reel to house it once, setting the reel having the shaped steel cord on an unwinding device when the belt-reinforcing layer is formed, and unwinding the shaped steel cord from the set reel to wind it about a belt-forming drum. Therefore, some steps including a step of winding the shaped steel cord around a reel to house it once and the like are required when the belt-reinforcing layer is formed, which contributes to deterioration of tire productivity.
Patent Document US3682222A discloses a reinforced tire fabric comprising an elastomeric body portion in which a plurality of helically formed, single filament wires constitute the reinforcing, adjacent filamentspreferablybeingof opposite hand.
Patent Document US2004/256044A1 discloses a tyre for motor vehicles comprising at least one pair of belt plies having each a plurality of cords oriented obliquely with respect to the equatorial plane of the tyre.
Patent Document US2005/139324A1 discloses an apparatus for applying a strip to a rotary surface during the manufacturing of a tire.
Patent Document EP1284203A1 discloses a pneumatic vehicle tyre comprising at least partly metallic wires having different wave amplitudes in an edge region, in a central region and in an intermediate region between the edge region and the central region.
Patent Document US2003/047265A1 discloses a pneumatic tire with monofilament metallic belt cords laid at angles of from 15 to 30 degrees with respect to the circumferential direction of the tire.
Patent Document JP2000129583A discloses a pneumatic tire using steel cords each made of one element wire in which a kink pitch and amplitude of wave shape or the like vary in respective ranges.

### DISCLOSURE OF THE INVENTION

### PROBLEM TO BE SOLVED BY THE INVENTION

An object of the present invention is to provide a method of manufacturing a pneumatic tire capable of improving productivity.

### MEANS FOR SOLVING THE PROBLEM

In order to achieve the above object, the present invention provides a method of manufacturing a pneumatic tire according to claim 1.

Further advantages are provided by features of dependent claims.

### EFFECT OF THE INVENTION

According to the present invention described above, since the shaped steel cord is not wound around a reel or housed it, and the belt-reinforcing layer is directly formed around the belt-forming drum with the shaped steel cord, a process for housing the shaped steel cord constituting the belt-reinforcing layer and the like are eliminated, enabling tire productivity to be enhanced.

By winding the shaped steel cord in such a manner that its winding number per unit width of the belt-reinforcing layer is substantially equal, the circumferential stiffness of the belt-reinforcing layer can be changed in the widthwise direction of the tire without an increase in fatigue damage the steel cord accepts during winding.

### BRIEF DESCRIPTION OF THE DRAWINGS

[FIG. 1] FIG. 1 is an explanatory drawing illustrating a step of forming a belt-reinforcing layer in a method of manufacturing a pneumatic tire according to the present invention.
[FIG. 2] FIG. 2 is a partial cross-sectional view showing an example of a pneumatic tire produced according to the method of manufacturing a pneumatic tire according to the present invention.
[FIG. 3] FIG. 3 is an explanatory drawing in cross section illustrating a step of forming a first formed assembly.
[FIG. 4] FIG. 4 is an explanatory drawing in cross section illustrating a step of forming a second formed assembly.
[FIG. 5] FIG. 5 is a partial enlarged view of a helically shaped steel cord.
[FIG. 6] FIG. 6 is an explanatory drawing illustrating an example of the steel cord in which the shaping pitch thereof is varied in a phased manner.
[FIG. 7] FIG. 7 is an explanatory drawing illustrating a formed belt cover layer.
[FIG. 8] FIG. 8 is an explanatory drawing in cross section illustrating a step of pressing the first formed assembly against the second formed assembly.

### DESCRIPTION OF THE SYMBOLS

- 1: feeding means
- 2: shaping means
- 2b: shaping pin
- 3: correcting means
- 3a: correcting roller
- 4: belt-forming drum
- 16: belt cover ply (belt-reinforcing layer)
- P: pitch
- S, S': steel cord
- W: amplitude

### BEST MODES FOR CARRYING OUT THE INVENTION

An embodiment of the present invention will be described in detail below with reference to the attached drawings.

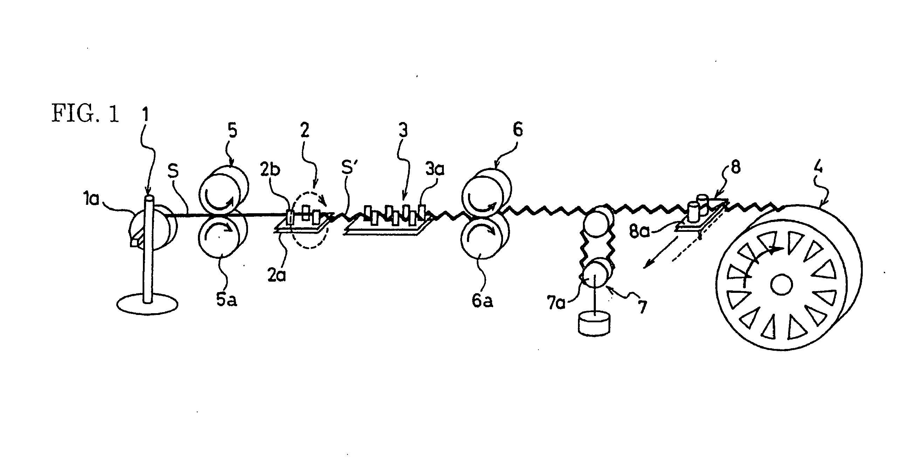

Referring to FIG. 1, there is shown a step of forming a belt-reinforcing layer in a method of manufacturing a pneumatic tire according to the present invention; reference numeral 1 denotes means for feeding a steel cord S, reference numeral 2 shaping means for shaping the steel cord S, reference numeral 3 means for correcting the shaped steel cord S, and reference numeral 4 a belt-forming drum.

The feeding means 1 has a reel 1a around which a steel cord S is wound. The steel cord S is unwound from the reel 1a by unwinding means 5 having a pair of rotatable unwinding rolls 5a to feed it to the shaping means 2.

The shaping means 2 has a rotating body 2a and a plurality of (three in the drawing) rotatable shaping pins 2b which are mounted on the rotating body 2a in a zigzag manner. The steel cord S, which is carried through the shapingpins 2b, is hellically shaped by the rotating action of the rotating body 2a and the drawing action of the shaping pins 2b rotating.

The correcting means 3 has a plurality of correcting rollers 3a arranged in a zigzag manner. The steel cord S' that has been helically shaped by the shaping means 2 is carried through the correcting rollers 3a, whereby it is uniformly corrected in helical shape.

The steel cord S' that has been corrected by the correcting means 3 is wound around the belt-forming drum 4 via carrying means 6, tension-retaining means 7 for keeping the tension of the carried steel cord S' constant, and winding means 8 with a traverse head 8a which can reciprocate in the widthwise direction of the drum, the tension-retaining means having a dancer roller 7a which can move up and down.

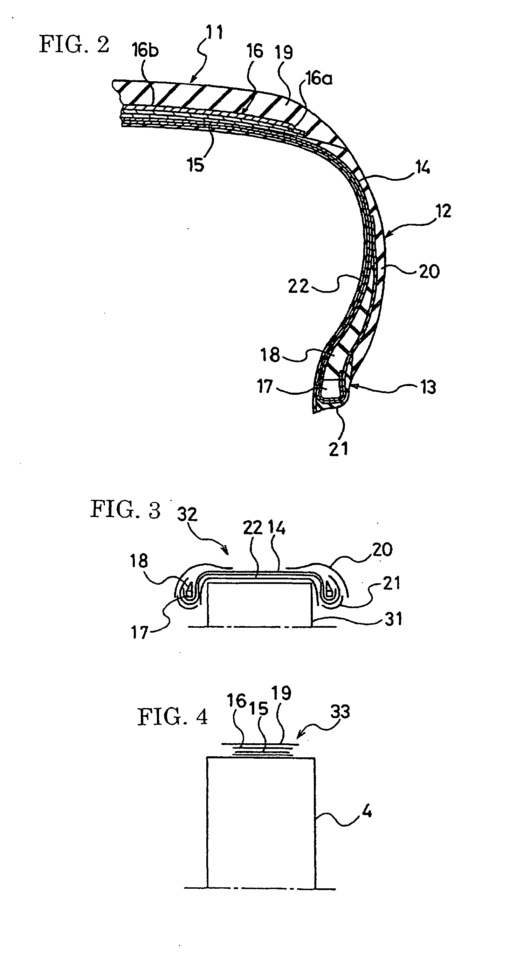

An example of a pneumatic tire manufactured with a method of manufacturing a pneumatic tire according to the present invention is shown in FIG. 2. This pneumatic tire includes a tread portion 11, a right and a left sidewall portions 12, and a right and a left bead portions 13. Carcass plies 14 extend between the right and left bead portions 13, and have opposite end portions which are turned up around bead cores 17 embedded in the bead portions 13 from the inner side of the tire to the outer side thereof in such a manner that bead fillers 18 are sandwiched by the end portions. Belt plies 15 are disposed radailly outwardly of the carcass plies 14 in the tread portion 11.

A belt cover ply 16 is provided radailly outwardly of the belt plies 15 as a belt-reinforcing layer. The belt cover ply 16 has a steel cord S' continuously shaped in a helical manner or in a manner of a two-dimensional wave. The steel cord S' is spirally wound at an angle of nearly 0° with respect to the circumferential direction of the tire in such a manner that stiffness of the belt cover ply 16 in the circumferential direction of the tire varies in the widthwise direction of the tire.

A tread rubber layer 19 is placed radially outwardly of the belt cover ply. A side rubber layer 20 are disposed outward of the carcass plies 14 in each sidewall portion 12, and a cushion rubber layer 21 is provided in each bead portion 13. An innerliner 22 which acts as an air impermeable layer is placed inward of the carcass plies 14.

Steps for manufacturing a pneumatic tire having a construction shown in FIG. 2 will be described below according to a method of manufacturing a pneumatic tire according to the present invention. The method of manufacturing a pneumatic tire according to the present invention is the same as the prior art method except for a step of forming a belt cover ply 16; therefore, the same steps as those of the prior art method will not be described in detail but will be described in brief.

First, as shown in FIG. 3, a first formed assembly 32 is formed on a first building drum 31 as in the prior art method. More specifically, an unvulcanized innerliner 22, unvulcanized carcass plies 14, bead cores 17 with unvulcanized bead fillers 18, unvulcanized cushion rubber layers 21, unvulcanized side rubber layers 20 are sequentially applied onto the first building drum 31 to form a first formed assembly 32.

On the other hand, as shown in FIG. 4, a second formed assembly 33 is formed on a second building drum (belt-forming drum) 4. More specifically, unvulcanized belt plies 15 are applied onto the second building drum 4 as in the prior art method. An unvulcanized belt cover ply 16 will then be formed on the unvulcanized belt plies 15 as below.

As shown in FIG. 1, a steel cord S which is not shaped is unwound from the feeding means 1 through the unwinding means 5 to feed it to the shaping means 2. In the shaping means 2, the steel cord S is helically shaped by the rotating action of the rotating body 2a and the drawing action of the shaping pins 2b rotating.

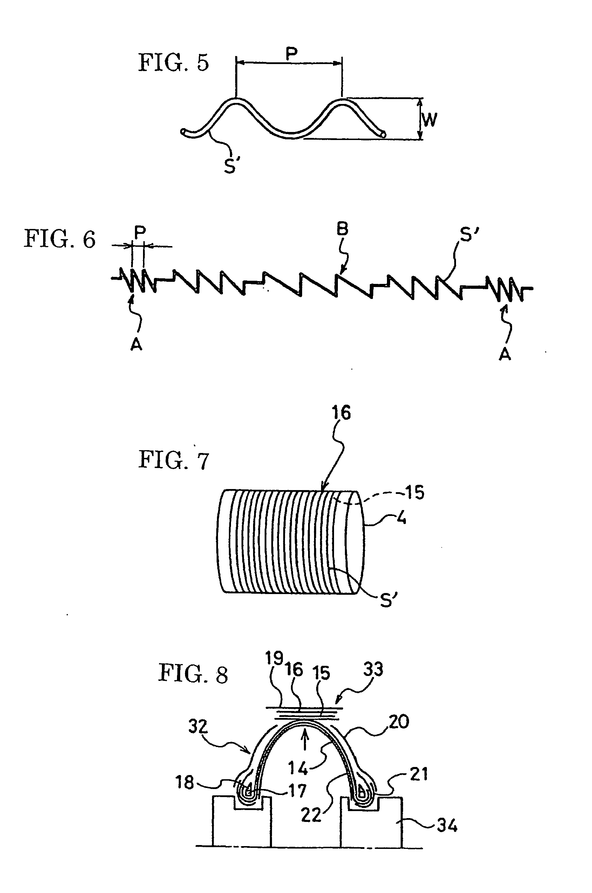

The shaping means 2 continuously shapes the steel cord S helically with its pitch P (see FIGS. 5 and 6) of shaping varying in a phased manner or in a continuous manner. Varying of the pitch P in a phased manner or in a continuous manner is performed by varying at least one of the rotation speed of the shaping pins 2b and the feeding speed of the steel cord S (the rotation speeds of the unwinding rolls 5a of the unwinding means 5 and the rollers 6a of the carrying means 6) in a phased manner or in a continuous manner.

When a belt-forming layer to be formed is the belt cover ply 16, as shown in FIG. 6, the steel cord is shaped such that portions A of the steel cord S' corresponding to opposite ends 16a of the belt cover ply 16 located on the opposite sides of the belt plies 15 have a shorter pitch P of shaping, and a portion B thereof corresponding to a middle portion 16b between the opposite ends 16a has a longer pitch of shaping.

The steel cord S' continuously shaped by the shaping means 2 as described above is sequentially fed to the correcting means 3, where the steel cord S' is carried through the correcting rollers 3a, whereby it is uniformly corrected in helical shape. The corrected steel cord S' is sent to the traverse head 8a of the winding means 8 through the carrying means 6 and the tension-retaining means 7.

While the traverse head 8a moves from one side of the second building drum 4 toward the other side thereof in the widthwise direction of the drum, the traverse head winds the helically shaped steel cord S' spirally in the circumferential direction of the drum around the belt plies 15 on the second building drum 4 rotating in such a manner that, while the circumferential stiffness of the belt cover ply 16 varies in the widthwise direction of the tire, the winding number of the steel cord S' per unit width of the belt cover ply 16 is substantially equal. In the case of the above belt cover ply 16, the steel cord S' is wound such that the portions A having a shorter pitch P of shaping are disposed at locations of the opposite ends 16a of the belt cover ply 16 and the portion B having a longer pitch P is disposed at a location of the middle portion 16b of the belt cover ply 16.

The traverse head 8a moves to the other side of the second building drum 4 in the widthwise direction of the drum, and there is formed on the belt plies 15 on the second building drum 4 a belt cover ply 16 (see FIG. 7) having the helically and continuously shaped steel cord S' wound spirally in the circumferential direction of the tire in such a manner that its circumferential stiffness varies in the widthwise direction of the tire. It should be noted that the belt cover ply 16 is shown in FIG. 7 in a simplified manner with the steel cord S' illustrated in straight line, but the steel cord S' is helically shaped in practice.

An unvulcanized rubber sheet for coating the steel cord S' is wound around the formed belt cover ply 16 as required. Alternatively, it maybe arranged such that a process for coating the shaped steel cord S' with unvulcanized rubber is provided between the tension-retaining means 7 and the traverse head 8a, and the steel cord S' , which is coated with unvulcanized rubber in the process, is wound around the unvulcanized belt plies 15.

In the case where the steel cord S is continuously shaped in a manner of a two-dimensional wave, in the alternative of helically shaping, it is sufficient to provide between the correcting means 3 and the winding means 8 means for making the helically and continuously shaped steel cord S' into the form of a two-dimensional wave by pressing it in a plane state.

After formation of the belt cover ply 16, an unvulcanized tread rubber layer 19 is applied onto the belt cover ply 16 to form a second formed assembly 33.

A green tire is then built as in the prior art method. More specifically, while the first formed assembly 32 is removed from the first building drum 31, the second formed assembly 33 is removed from the second building drum 4. The first formed assembly 32 is mounted on a shaping drum 34 and is internally pressurized to give lift to the first formed assembly 32 as shown in FIG. 8. This inflates the first formed assembly 32 in a toroidal shape, which is pressed against the radially inner side of the second formed assembly 33 placed radially outward to build a green tire. This green tire is set in a tire-vulcanizing machine to vulcanize it, obtaining a pneumatic tire shown in FIG. 2.

According to the present invention described above, the steel cord S is continuously shaped in a helical manner or in a manner of a two-dimensional wave just before application to the second building drum 4, and the shaped steel cordS' is directly wound around the second building drum 4 to form the belt cover ply 16, thereby avoiding winding the shaped steel cord S' around a reel and housing it. Therefore, processes relating to housing of the shaped steel cord S' used for the belt cover ply 16 are eliminated, enabling tire productivity to be enhanced.

By winding the shaped steel cord S' in such a manner that the winding number per unit width of the belt cover ply 16 is substantially equal, the circumferential stiffness of the belt cover ply 16 can be changed in the widthwise direction of the tire without an increase in fatigue damage the steel cord S' accepts during winding.

In the above embodiment, in order to vary the circumferential stiffness of the belt cover ply 16 in the widthwise direction of the tire, the shaping pitch P of the steel cord S' is changed in a phased manner or in a continuous manner; however, in the method of manufacturing a pneumatic tire according to the present invention, instead of that, the steel cord S may continuously be shaped in a helical manner or in a manner of a two-dimensional wave with its shaping amplitude W varying in a phased manner or in a continuous manner; the steel cord S may continuously be shaped in a helical manner or in a manner of a two-dimensional wave with at least one of the shaping amplitude W and pitch P varying in a phased manner or in a continuous manner.

As an example of the belt-reinforcing layer, a belt cover ply 16 is shown in the above embodiment. However, the belt-reinforcing layer referred in the present invention may be any reinforcing layer if the reinforcing layer is disposed radially outwardly of a carcass ply in the tread portion and has a structure of winding a steel cord spirally in the circumferential direction of the tire, preferably at an angle of nearly 0° with respect to the circumferential direction of the tire. Other examples of the belt-reinforcing layer can include, for example, a belt ply having a structure of winding a steel cord spirally in the circumferential direction of the tire, preferably at an angle of nearly 0° with respect to the circumferential direction of the tire, and a reinforcing layer which is disposed radially inwardly of a belt ply or between belt plies and has the same structure. A pneumatic tire having such a belt-reinforcing layer may be manufactured with the method of manufacturing a pneumatic tire according to the present invention.

The above-mentioned steel cord S may be a steel cord having a plurality of steel filaments twisted with each other or a single wire steel cord formed from one steel wire.

The present invention is preferably applicable to a method of manufacturing a pneumatic tire including a belt-reinforcing layer arranged so as to vary its circumferential stiffness in the widthwise direction of the tire with the winding number of the shaped steel cord S' per unit width being substantially equal. However, the present invention can also be applied to a method of manufacturing a pneumatic tire including a belt-reinforcing layer the shaped steel cord S' of which is wound in such a manner that the winding number per unit width is different, as is obvious.

### INDUSTRIAL APPLICABILITY

The method of manufacturing a pneumatic tire according to the present invention having the aforementioned excellent effect can be utilized to manufacture a pneumatic tire having a belt-reinforcing layer in which a steel cord which is continuously shaped in a helical manner or in a manner of a two-dimensional wave is spirally wound in such a manner that its circumferential stiffness varies in the widthwise direction of the tire.

## Claims

1. A method of manufacturing a pneumatic tire having a belt-reinforcing layer (16) in which a steel cord (S'), which is continuously shaped in a helical manner or in a manner of a two-dimensional wave, is spirally wound in such a manner that circumferential stiffness thereof varies in a widthwise direction of the tire, **characterized in that** it comprises the steps of:
- continuously shaping a steel cord (S) in a helical manner or in a manner of a two-dimensional wave, with a pitch (P) of shaping of the steel cord varying in a phased manner or in a continuous manner just before winding of the steel cord around a belt-forming drum (4); and
- continuously winding the shaped steel cord (S') around the belt-forming drum spirally in a circumferential direction of the drum (4) providing the belt-reinforcing layer (16) with circumferential stiffness, which varies in the widthwise direction of the tire by varying the pitch.

2. A method of manufacturing a pneumatic tire according to claim 1, wherein the winding step further comprises spirally winding a substantially equal number of the shaped steel cord (S') per unit width of the belt-reinforcing layer (16).

3. A method of manufacturing a pneumatic tire according to claim 1 or 2, further comprising a step of winding an unvulcanized rubber layer (19) around the shaped steel cord (S') after winding of it.

4. A method of manufacturing a pneumatic tire according to claim 1 or 2, further comprising a step of coating the shaped steel cord (S') with unvulcanized rubber before winding.

5. A method of manufacturing a pneumatic tire according to any one of claims 1 to 4, wherein the winding step further comprises spirally winding the shaped steel cord (S') at an angle of nearly 0° with respect to the circumferential direction of the tire.

6. A method of manufacturing a pneumatic tire according to any one of claims 1 to 5, wherein the tire has a belt ply in a tread portion (11), the belt-reinforcing layer being a belt cover ply (16) disposed radially outwardly of the belt ply, the winding step further comprising spirally winding the shaped steel cord around a belt ply (15) formed on the belt-forming drum (4) in such a manner that portions thereof having a shorter pitch are disposed at locations of opposite ends (16a) of the belt cover ply (16) and a portion thereof having a longer pitch is disposed at a location of a middle portion (16b) of the belt cover ply between the opposite ends.

7. A method of manufacturing a pneumatic tire according to claim 1, wherein the steel cord (S) is continuously shaped with:
- a shorter pitch (P) of shaping in portions (A) of the steel cord corresponding to opposite ends (16a) of the belt-reinforcing layer (16); and
- a longer pitch of shaping in a portion (B) of the steel cord corresponding to a middle portion (16b) of the belt-reinforcing layer (16) between the opposite ends (16a).

## Patentansprüche

1. Verfahren zum Herstellen eines Luftreifens mit einer gürtelverstärkenden Schicht (16), in der ein Stahlseil (S'), das durchgängig wie eine Helix oder eine zweidimensionale Welle profiliert ist, spiralförmig gewickelt ist, so dass eine Umfangssteifigkeit davon in Breitenrichtung des Reifens variiert, **dadurch gekennzeichnet, dass** es die Schritte umfasst:
- durchgängiges Profilieren eines Stahlseils (S) wie eine Helix oder eine zweidimensionale Welle, wobei eine Teilung (P) des Profils des Stahlseils in Phasen oder durchgängig variiert, kurz bevor das Stahlseil um eine gürtelbildende Trommel (4) gewickelt wird; und
- spiralförmiges, durchgängiges Wickeln des profilierten Stahlseils (S') um die gürtelbildende Trommel in eine Umfangsrichtung der Trommel (4), wodurch die gürtelverstärkende Schicht (16) mit Umfangssteifigkeit versehen wird, die in Breitenrichtung des Reifens durch die variierende Teilung variiert.

2. Verfahren zum Herstellen eines Luftreifens nach Anspruch 1, wobei der Wickelschritt darüber hinaus das spiralförmige Wickeln einer im Wesentlichen gleichen Anzahl des profilierten Stahlseils (S') pro Einheitsbreite der gürtelverstärkenden Schicht (16) umfasst.

3. Verfahren zum Herstellen eines Luftreifens nach Anspruch 1 oder 2, das darüber hinaus einen Schritt des Wickelns einer Schicht (19) aus unvulkanisiertem Gummi um das profilierte Stahlseil (S') nach dem Wickeln von diesem umfasst.

4. Verfahren zum Herstellen eines Luftreifens nach Anspruch 1 oder 2, das darüber hinaus einen Schritt des Beschichtens des profilierten Stahlseils (S') mit unvulkanisiertem Gummi vor dem Wickeln umfasst.

5. Verfahren zum Herstellen eines Luftreifens nach einem der Ansprüche 1 bis 4, wobei der Wickelschritt darüber hinaus das spiralförmige Wickeln des profilierten Stahlseils (S') in einem Winkel von beinahe 0° in Bezug auf die Umfangsrichtung des Reifens umfasst.

6. Verfahren zum Herstellen eines Luftreifens nach einem der Ansprüche 1 bis 5, wobei der Luftreifen eine Gürtellage in einem Laufflächenabschnitt (11) aufweist, wobei die gürtelverstärkende Schicht eine Gürteldeckschicht (16) ist, die in Bezug auf die Gürtelschicht radial nach außen platziert ist, wobei der Wickelschritt darüber hinaus das spiralförmige Wickeln eines profilierten Stahlseils um eine Gürtelschicht (15) umfasst, die auf der gürtelbildenden Trommel (4) gebildet ist, so dass Teile davon mit einer kürzeren Teilung an Positionen gegenüberliegender Enden (16a) der Gürteldeckschicht (16) angeordnet sind, und ein Teil davon mit einer längeren Teilung an einer Position eines mittleren Abschnitts (16b) der Gürteldeckschicht zwischen den gegenüberliegenden Enden angeordnet ist.

7. Verfahren zum Herstellen eines Luftreifens nach Anspruch 1, wobei das Stahlseil (S) durchgängig profiliert ist mit:
- einer kürzeren Teilung (P) des Profils in Abschnitten (A) des Stahlseils, die gegenüberliegenden Enden (16a) der gürtelverstärkenden Schicht (16) entsprechen; und
- einer längeren Teilung des Profils in einem Abschnitt (B) des Stahlseils, der einem mittleren Abschnitt (16b) der gürtelverstärkenden Schicht (16) zwischen den gegenüberliegenden Enden (16a) entspricht.

## Revendications

1. Procédé de fabrication d'un pneumatique comportant une couche de renforcement de ceinture (16) dans laquelle un câble en acier (S'), qui est formé d'une manière continue d'une manière hélicoïdale ou à la manière d'une onde bidimensionnelle, est enroulé en spirale d'une manière telle que la rigidité circonférentielle de celui-ci varie dans une direction de largeur du pneumatique, **caractérisé en ce qu'**il comprend les étapes :
- de mise en forme continue d'un câble en acier (S) d'une manière hélicoïdale ou à la manière d'une onde bidimensionnelle, avec un pas (P) de mise en forme du câble en acier variant d'une manière déphasée ou continue juste avant l'enroulement du câble en acier autour d'un tambour de formation de ceinture (4) ; et
- d'enroulement d'une manière continue du câble en acier formé (S') autour du tambour de formation de ceinture en spirale dans une direction circonférentielle du tambour (4) fournissant à la couche de renforcement de ceinture (16) une rigidité circonférentielle, qui varie dans la direction de largeur du pneumatique en faisant varier le pas.

2. Procédé de fabrication d'un pneumatique selon la revendication 1, dans lequel l'étape d'enroulement comprend en outre l'enroulement en spirale du câble en acier formé (S') avec un nombre d'enroulements sensiblement identique par largeur unitaire de la couche de renforcement de ceinture (16).

3. Procédé de fabrication d'un pneumatique selon la revendication 1 ou 2, comprenant en outre une étape d'enroulement d'une couche de caoutchouc non vulcanisé (19) autour du câble en acier formé (S') après l'enroulement de celui-ci.

4. Procédé de fabrication d'un pneumatique selon la revendication 1 ou 2, comprenant en outre une étape de revêtement du câble en acier formé (S') avec du caoutchouc non vulcanisé avant l'enroulement.

5. Procédé de fabrication d'un pneumatique selon l'une quelconque des revendications 1 à 4, dans lequel l'étape d'enroulement comprend en outre l'enroulement en spirale du câble en acier formé (S') selon un angle presque égal à 0° par rapport à la direction circonférentielle du pneumatique.

6. Procédé de fabrication d'un pneumatique selon l'une quelconque des revendications 1 à 5, dans lequel le pneumatique comporte une nappe de ceinture dans une partie de bande de roulement (11), la couche de renforcement de ceinture étant une nappe de recouvrement de ceinture (16) disposée radialement à l'extérieur de la nappe de ceinture, l'étape d'enroulement comprenant en outre l'enroulement en spirale du câble en acier formé autour d'une nappe de ceinture (15) formée sur le tambour de formation de ceinture (4) d'une manière telle que les parties de celui-ci ayant un pas plus petit soient disposées à des emplacements d'extrémité opposés (16a) de la nappe de recouvrement de ceinture (16) et qu'une partie de celui-ci ayant un pas plus grand soit disposée à un emplacement d'une partie centrale (16b) de la nappe de recouvrement de ceinture entre les extrémités opposées.

7. Procédé de fabrication d'un pneumatique selon la revendication 1, dans lequel le câble en acier (S) est formé d'une manière continue avec :
- un pas plus petit (P) de mise en forme dans les parties (A) du câble en acier correspondant aux extrémités opposées (16a) de la couche de renforcement de ceinture (16) ; et
- un pas plus grand de mise en forme dans une partie (B) du câble en acier correspondant à une partie centrale (16b) de la couche de renforcement de ceinture (16) entre les extrémités opposées (16a).
